# EUROPÄISCHE PATENTSCHRIFT

(11) **EP 1 980 436 B1**
(45) Veröffentlichungstag und Bekanntmachung des Hinweises auf die Patenterteilung: **24.07.2013**
(21) Anmeldenummer: 08006740.8
(22) Anmeldetag: 02.04.2008
(51) Int. Cl.: B60J 5/06

(54) **Kraftfahrzeug mit Kraftfahrzeug-Schiebetür**
Motor vehicle with motor vehicle sliding door
Véhicule automobile avec une porte coulissante de véhicule automobile

(30) Priorität: 12.04.2007 DE 102007017169
(43) Veröffentlichungstag der Anmeldung: 15.10.2008
(73) Patentinhaber: GM Global Technology Operations LLC, Detroit, MI 48265-3000 (US)
(72) Erfinder: Lange, Marcus, 64319 Pfungstadt (DE)
(74) Vertreter: Kraenzmer, Martin

(56) Entgegenhaltungen:
- EP-A- 1 591 589
- EP-A- 1 911 917
- DE-A1- 10 326 241
- DE-B3- 10 300 158
- US-A1- 2003 009 846

## Beschreibung

Die vorliegende Erfindung liegt auf dem Gebiet der Kraftfahrzeugtechnik und betrifft ein Kraftfahrzeug mit einem Schienensystem einer Lagerungs- und Führungsvorrichtung für eine Kraftfahrzeug-Schiebetür.

### Stand der Technik

Moderne Personen-Kraftfahrzeuge, insbesondere Fahrzeuge vom Typ eines Vans, werden zunehmend mit seitlichen Türen ausgerüstet, die so eingebaut sind, dass sie zwischen einer Schließposition, in der sie die Türöffnung verschließen, und einer Öffnungsposition, in der sie sich entlang der äußeren Seitenfläche des Fahrzeugs erstrecken und die Türöffnung freigeben, verschoben werden können ("Schiebetüren").

Wesentlicher Grund hierfür ist der geringe seitliche Platzbedarf beim Öffnen der Schiebetüren, der es ermöglicht, dass die Türöffnung insbesondere auch in engen Parklücken vollständig freigegeben werden kann. Schiebetüren ermöglichen somit ein bequemeres Ein- und Aussteigen der Fahrgäste, sowie ein erleichtertes Be- und Entladen des Fahrzeugs.

Typischer Weise ist eine seitliche Schiebetüre mittels einer in Schienen verschiebbaren Mehrfachhalterung mit einem Kraftfahrzeug verbunden. Die Mehrfachhalterung umfasst meist eine obere Führungsschiene, die in der Türöffnung nahe dem Fahrzeugdach angeordnet ist, eine untere Führungschiene, die in der Türöffnung nahe dem Türschwellenbereich angeordnet ist, und eine mittlere Führungsschiene, die in der Seitenwand des Fahrzeugs heckwärts der Türöffnung etwa in Taillenhöhe angeordnet ist. Zu diesem Zweck ist die Schiebetür mit einer Trägerkonstruktion verbunden, die in jede der Führungsschienen verschiebbar eingreift.

Die Trägerkonstruktion umfasst ihrerseits eine Mehrzahl den jeweiligen Führungsschienen zugeordnete Baugruppen. Diese Baugruppen sind jeweils aus einem mit der Schiebetür verbundenen Tragarm und einem mit dem Tragarm verbundenen Rollenträger mit beispielsweise zwei Rollen, der von der Führungsschiene verschiebbar geführt und gehalten ist, aufgebaut. Gewöhnlich ist der Tragarm etwa in einer mittigen Position des Rollenträgers, beispielsweise zwischen den beiden Rollen, mit dem Rollenträger verbunden.

Soll eine möglichst große Türöffnung zur Verfügung stehen, ist ein relativ langer Verschiebeweg der Schiebetür in Längsrichtung des Kraftfahrzeugs entlang dessen Seitenfläche erforderlich, so dass sich die mittlere Führungsschiene meist bis zum Fahrzeugheck erstreckt.

Um eine Berührung zwischen der Schiebetür und der Fahrzeugkarosserie beim Verschieben der Schiebetür in ihre Öffnungsposition zu vermeiden, ist bislang ein in der perspektivischen Ansicht eher kastenförmiges Styling der Heckpartie des Kraftfahrzeugs erforderlich. Bei Personenkraftfahrzeugen, insbesondere vom Van-Typ, mit einem relativ großen Fahrzeuginnenraum ist ein solches Lastfahrzeugen ähnelndes Design unter kommerziellen Gesichtspunkten nachteilig. Vielmehr wäre es hier wünschenswert, das Fahrzeug mit einer eingezogenen Heckpartie zu versehen, bei der sich in der perspektivischen Frontansicht des Fahrzeugs, die beiden Seitenflächen des Fahrzeugs in dessen Heckpartie zur Fahrzeugmitte hin krümmen, was dem Fahrzeug trotz eines relativ großen Innenraums ein eleganteres Aussehen verleiht.

Die deutsche Offenlegungsschrift DE 10326241 A1 zeigt eine Schiebeeinrichtung für Schiebetüren im Bereich einer Fahrzeugkarosserie, bei welchem ein Tragelement für eine ausschwenkbare Schiebetür an einem Laufwagen, der in einer Führungsschiene geführt ist, angebracht ist. Durch einen zusätzlichen Verschiebungsmechanismus an der Schiebetür kann eine vergrößerte Öffnung herbeigeführt werden. Das deutsche Patent DE 10300158B3 zeigt eine Führungseinrichtung für Schiebetüren, bei der die Führungsschiene im Endbereich in einen gebogenen Schienenabschnitt übergeht, wobei die Schiebetür in den gebogenen Schienenabschnitt eingeschoben werden kann, um eine vergrößerte Öffnung herbeizuführen.

### Aufgabenstellung

Demgegenüber besteht die Aufgabe der vorliegenden Erfindung darin, eine Anbindung für seitliche Schiebetüren an die Fahrzeugkarosserie zur Verfügung zu stellen, welche es erlaubt, das Fahrzeug mit einer (stärker) eingezogenen Heckpartie zu versehen, ohne dass die Schiebetür beim Verschieben in ihre Öffnungsstellung mit der Fahrzeugkarosserie kollidiert.

Diese Aufgabe wird nach dem Vorschlag der Erfindung durch ein Kraftfahrzeug mit einer eingezogenen Heckpartie mit einem Schienensystem einer Lagerungs- und Führungsvorrichtung für eine Schiebetür mit den Merkmalen des unabhängigen Anspruchs gelöst. Vorteilhafte Ausgestaltungen der Erfindung sind durch die Merkmale der Unteransprüche angegeben.

Erfindungsgemäß ist ein mit einer eingezogenen Heckpartie versehenes Kraftfahrzeug mit einem Schienensystem (genauer Schiene-/Laufwagensystem) einer Lagerungs- und Führungsvorrichtung für eine in Schienen verschiebbar geführte Schiebetür gezeigt, durch welche die Schiebetür zwischen einer Schließstellung in der die Schiebetür eine Türöffnung verschließt und einer Öffnungsstellung in der sich die Tür seitlich neben der Türöffnung befindet, verschiebbar ist.

Das heckseitig der Türöffnung angeordnete Schienensystem der Lagerungs- und Führungsvorrichtung für die Schiebetür umfasst eine mit der Karosserie fest verbundene Führungsschiene und eine der Führungsschiene zugeordnete Baugruppe.

Die Führungsschiene kann beispielsweise auf Taillenhöhe (mittlere Höhe) des Kraftfahrzeugs angeordnet sein. Sie ist mit einem im Wesentlichen in Fahrzeugslängsrichtung sich erstreckenden geraden Schienenabschnitt und einen sich daran anschließenden bogenförmigen Abschnitt, der in heckwärtiger Richtung dem zur Fahrzeugmitte hin einziehenden Verlauf der Seitenfläche des Kraftfahrzeugs folgt und aufgrund dessen an seinem heckseitigen Endabschnitt bogenförmig ausgebildet ist. Dieser bogenförmige Endabschnitt, im Weiteren als "Bogenabschnitt" der Führungsschiene bezeichnet, ist somit der Außenhaut der eingezogen Heckpartie folgend zur Fahrzeugmitte hin gekrümmt.

Die der Führungsschiene zugeordnete Baugruppe umfasst eine in die Führungsschiene eingreifende Lagerungseinheit, die in der Führungsschiene verschiebbar gelagert ist. Die Lagerungseinheit ist mithilfe wenigstens eines Verschiebungsmittels, beispielsweise ein Gleit- oder Rollelement, entlang der Führungsschiene verschiebbar gelagert. Die Lagerungseinheit dient der verschiebbaren Führung und Lagerung der Schiebetür in der Führungsschiene.

Die der Führungsschiene zugeordnete Baugruppe umfasst weiterhin ein mit der Lagerungseinheit starr verbundenes Tragelement, das frontseitig des Verschiebungsmittels frontwärts im Wesentlichen in Fahrzeuglängsrichtung von der Lagerungseinheit absteht. Das Tragelement kann beispielsweise als länglicher Tragarm ausgebildet sein. An dem Tragelement ist die Schiebetür mittels einer Schwenklagerung schwenkbeweglich angebracht. Die schwenkbewegliche Lagerung der Schiebetür an dem Tragelement ermöglicht eine Verschwenkung der Schiebetür um eine vertikale Schwenkachse. Wesentlich hierbei ist, dass eine Anbindungsstelle der Schiebetür mit dem Einschieben der Lagerungseinheit in den Bogenabschnitt vom Fahrzeug weg bewegt und die Schiebetür in den Bogenabschnitt ohne Kollision mit der Karosserie eingeschoben werden kann. Durch das Schienensystem ist es aufgrund einer durch die Gestaltung der Baugruppe bedingten Auswärtsbewegung der Anbindungsstelle für die Schiebetür beim Verschieben der Lagereinrichtung in den gekrümmten Bogenabschnitt der Führungsschiene somit in vorteilhafter Weise ermöglicht, das Fahrzeug mit einer eingezogenen Heckpartie zu versehen.

Bei einer vorteilhaften Ausgestaltung des erfindungsgemäßen Kraftfahrzeugs ist die Lagerungseinheit mit wenigstens zwei in Fahrzeuglängsrichtung beabstandeten Verschiebungsmitteln versehen. In diesem Fall steht das mit der Lagerungseinheit starr verbundene Tragelement frontseitig des frontseitigen Verschiebungsmittels von der Lagerungseinheit ab.

Somit erstreckt sich das Tragelement wenigstens in einem Teilabschnitt zur Fahrzeugfront hin, wobei es vorteilhaft ist, wenn das Tragelement mit einem vom Fahrzeug weg gerichteten, frontseitigen Endabschnitt versehen ist, an dem die Schiebetür schwenkbeweglich angebracht ist. Der vom Fahrzeug weg gerichtete, frontseitige Endabschnitt kann beispielsweise einen Winkel von 90° zu einem zur Fahrzeugfront gerichteten (Teil-)Abschnitt des Tragelements einnehmen.

Bei einer vorteilhaften Ausgestaltung des erfindungsgemäßen Kraftfahrzeugs umfasst dieses weiterhin im Bereich der Türöffnung wenigstens ein zweites Schienensystem, das eine mit der Karosserie fest verbundene Führungsschiene und eine der Führungsschiene zugeordnete Baugruppe aufweist.

Die Führungsschiene des zweiten Schienensystems kann beispielsweise eine obere Führungsschiene, die in der Türöffnung nahe dem Fahrzeugdach angeordnet ist, sein. Sie kann ebenso eine untere Führungsschiene, die in Türöffnung nahe dem Türschwellenbereich angeordnet ist, sein.

Die der zweiten Führungsschiene des zweiten Schienensystems zugeordnete zweite Baugruppe umfasst eine in die zweite Führungsschiene eingreifende Lagerungseinheit, die in der zweiten Führungsschiene verschiebbar gelagert ist. Die Lagerungseinheit ist mithilfe wenigstens eines Verschiebungsmittels, beispielsweise ein Gleit- oder Rollelement, entlang der Führungsschiene verschiebbar gelagert. Die Lagerungseinheit dient der verschiebbaren Führung und Lagerung der Schiebetür in der Führungsschiene.

Die der Führungsschiene des zweiten Schienensystems zugeordnete Baugruppe umfasst weiterhin ein mit der Lagerungseinheit und der Schiebetür verbundenes Tragelement, beispielsweise ein länglicher Tragarm, das die Schiebetür schwenkbeweglich mit der Lagerungseinheit verbindet. Zur schwenkbeweglichen Lagerung der Schiebetür an der Lagerungseinheit kann zwischen dem Tragelement und der Schiebetür und/oder zwischen dem Tragelement und der Lagerungseinheit ein Schwenklager vorgesehen sein. Die schwenkbewegliche Lagerung der Schiebetür an der Lagerungseinheit ermöglicht ein Verschwenken der Schiebetür um eine vertikale Schwenkachse.

### Ausführungsbeispiel

Die Erfindung wird nun anhand eines Ausführungsbeispiels näher erläutert, wobei Bezug auf die beigefügte Zeichnung genommen wird. Es zeigt:

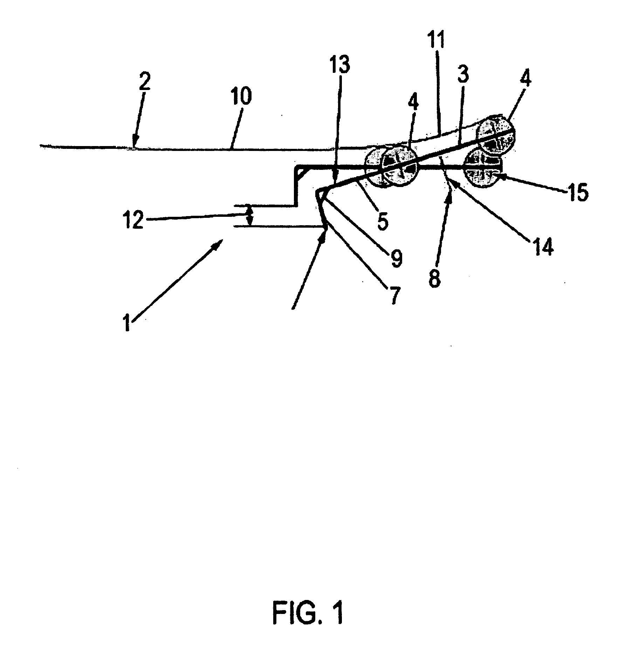

- Fig. 1: eine schematische Darstellung des Schienensystems entsprechend einem horizontalen Teilschnitt durch die Heckpartie eines Kraftfahrzeugs.

Es wird nun Fig. 1 erläutert, worin in einer schematischen Darstellung ein Ausführungsbeispiel des Schienensystems des erfindungsgemäßen Kraftfahrzeugs dargestellt ist. Die schematische Darstellung von Fig. 1 entspricht einer Ansicht von oben auf einen horizontalen Teilschnitt durch das Schienensystem im Bereich der zur Fahrzeugmitte hin eingezogenen Heckpartie eines Kraftfahrzeugs.

Demnach umfasst das insgesamt mit der Bezugszahl 1 bezeichnete Schienensystem eine Führungsschiene 2 und eine der Führungsschiene 2 zugeordnete Baugruppe, die ihrerseits aus mehreren Bauteilen zusammengesetzt ist, wie weiter unten erläutert ist.

Die in der nicht näher dargestellten Seitenfläche der Karosserie geformte und mit dieser fest verbundene Führungsschiene 2 erstreckt sich mit einem im Wesentlichen horizontalen Verlauf im Bereich zwischen der Türöffnung der Schiebetür und dem Fahrzeugheck. Die Führungsschiene 2 umfasst einen im Wesentlichen in Fahrzeuglängsrichtung sich erstreckenden geraden Schienenabschnitt 10 und einen sich daran heckwärts anschließenden gekrümmten Bogenabschnitt 11, der der eingezogenen Heckpartie des Fahrzeugs folgt und demnach zur Fahrzeugmitte hin gekrümmt ist. In Fig. 1 befindet sich das Fahrzeugheck demnach auf der rechten Seite während sich die Fahrzeugfront auf der linken Seite befindet.

Die der Führungsschiene 2 zugeordnete Baugruppe umfasst einen in die Führungsschiene 2 eingreifenden Rollenträger 3 ("Laufwagen") mit zwei in einem Abstand in Fahrzeuglängsrichtung zueinander angeordneten Rollen 4, durch die der Rollenträger 3 entlang der Führungsschiene 2 verschiebbar gelagert ist.

Die Baugruppe umfasst weiterhin einen Tragarm 13, der frontseitig der beiden Rollen 4 am Rollenträger 3 starr befestigt ist und frontwärts vom Rollenträger 3 absteht. Der Tragarm 13 ist aus zwei Tragarmabschnitten zusammengesetzt, nämlich einem ersten Tragarmabschnitt 5, der an seinem einen Endabschnitt mit dem Rollenträger 3 verbunden ist und sich in einer Verlängerung des Rollenträgers 3 im Wesentlichen in Fahrzeuglängsrichtung erstreckt, und einem mit dem anderen Endabschnitt des ersten Tragarmabschnitts 5 verbundenen zweiten Tragarmabschnitt 6.

Der zweite Tragarmabschnitt 6 ist mit seinem einen Endabschnitt mit dem ersten Tragarmabschnitt 5 verbunden, erstreckt sich im Wesentlichen im rechten Winkel zu dem ersten Tragarmabschnitt 5 und ist vom Fahrzeug weg gerichtet. Die beiden Tragarmabschnitte 5, 6 sind durch eine Stützstrebe 9 gegeneinander abgestützt. An seinem anderen Endabschnitt formt der der zweite Tragarmschnitt 6 eine Anbindungsstelle 7 zur schwenkbeweglichen Befestigung der Schiebetür mittels eines Schwenklagers.

Lediglich zum Vergleich hierzu, ist in Fig. 1 die herkömmliche Befestigung eines herkömmlichen Tragarms 14 am Rollenträger 3 gezeigt. Der Tragarm 14 ist hierbei an seinem einen Endabschnitt in etwa in der Mitte zwischen den beiden Rollen 4 mit dem Rollenträger 3 verbunden und ragt im rechten Winkel zu einer Verbindungslinie der beiden Rollen 4 vom Rollenträger ab. An seinem anderen Endabschnitt formt der Tragarm 14 eine herkömmliche Anbindungsstelle 8 für die Schiebetür, die somit in etwa einen gleichen Abstand von den beiden Rollen 4 einnimmt.

Wird die Schiebetür ganz geöffnet, wird der Rollenträger 3 heckwärts aus dem geraden Schienenabschnitt 10 in den gekrümmten Bogenabschnitt 11 verschoben. Mit dem Einschieben des Rollenträgers 3 in den Bogenabschnitt 11 wird die Anbindungsstelle 7 des Tragarms 13 für die Schiebetür und damit die Schiebetür selbst vom Fahrzeug weg bewegt. In Fig. 1 ist lediglich zu Vergleichszwecken dargestellt, wie eine obiger Baugruppe entsprechende Baugruppe 15 auf einer nicht näher dargestellten geraden Führungsschiene (ohne gekrümmten Bogenabschnitt) geführt würde. Hierdurch wird die durch den Doppelpfeil bezeichnete Wegstrecke 12 kenntlich, die die Anbindungsstelle 7 infolge des gekrümmten Bogenabschnitts 11 der Führungsschiene 2 durchläuft.

Dadurch, dass in dem erfindungsgemäßen Schienensystem die Anbindungsstelle 7 der Schiebetür und damit die Schiebetür selbst vom Fahrzeug weg bewegt wird, kann der Rollenträger 3 in den gekrümmten Bogenabschnitt 11 der Führungsschiene 2 eingeschoben werden, ohne dass Gefahr besteht, dass die Schiebetür mit der Karosserie kollidiert, so dass die Heckpartie in gewünschter Weise eingezogen gestaltet werden kann. Es ist lediglich dafür Sorge zu tragen, dass ein Endanschlag für die Schiebetür bzw. für die Verschiebung des Rollenträgers 3 im Bogenabschnitt 11 so eingestellt wird, dass keine oder lediglich eine geringe Annäherung der Schiebetür an die Führungsschiene 2 bzw. die Fahrzeugkarosserie erfolgt. Hierbei kann es vorteilhaft sein, wenn die beim Öffnen der Schiebetür nachlaufende Rolle 4 bzw. der Rollenträger 3 so weit heckwärts in den Bogenabschnitt 11 hinein verschoben wird, dass der durch die Wegstrecke 12 erzeugte "Zugewinn" an Abstand der Schiebetür von der Führungsschiene 2 bzw. Karosserie wieder aufgebraucht wird, so dass die Schiebetür in ihrem Endanschlag in Öffnungsstellung den gleichen Abstand von der Karosserie einnimmt, den sie hat, wenn sich der Rollenträger 3 im geraden Schienenabschnitt 10 der Führungsschiene 2 befindet.

Im Unterschied zur herkömmlichen Anbindungsstelle 8 für die Schiebetür kann somit die Heckpartie des Kraftfahrzeug eingezogen oder zumindest stärker eingezogen gestaltet werden, da eine Kollision zwischen Schiebetür und Fahrzeugkarosserie sicher vermieden werden kann.

### Bezugszeichenliste

- 1: Schienensystem
- 2: Führungsschiene
- 3: Rollenträger
- 4: Rolle
- 5: erster Tragarmabschnitt
- 6: zweiter Tragarmabschnitt
- 7: Anbindungsstelle
- 8: herkömmliche Anbindungsstelle
- 9: Stützstrebe
- 10: gerader Schienenabschnitt
- 11: gekrümmter Schienenabschnitt
- 12: Abstandszugewinn
- 13: Tragarm
- 14: herkömmlicher Tragarm
- 15: Vergleichsbaugruppe

## Patentansprüche

1. Kraftfahrzeug mit einer eingezogenen Heckpartie mit einem Schienensystem (1) einer Lagerungs- und Führungsvorrichtung für eine Schiebetür, durch welche die Schiebetür zwischen einer Schließstellung in der die Schiebetür eine Türöffnung verschließt und einer Öffnungsstellung in der sich die Tür seitlich neben der Türöffnung befindet, verschiebbar ist, welches umfasst:
- eine mit der Karosserie des Kraftfahrzeugs verbundene Führungsschiene (2), die mit einem im Wesentlichen in Fahrzeugslängsrichtung sich erstreckenden geraden Schienenabschnitt (10) und einem sich daran anschließenden Bogenabschnitt (11), der der eingezogenen Heckpartie folgend zur Fahrzeugmitte hin gekrümmt ist, versehen ist,
- eine der Führungsschiene (2) zugeordnete erste Baugruppe mit einer in die Führungsschiene (2) eingreifenden Lagerungseinheit (3), die mithilfe wenigstens eines Verschiebungsmittels (4) entlang der Führungsschiene verschiebbar ist, und einem mit der Lagerungseinheit starr verbundenen, frontseitig des Verschiebungsmittels frontwärts im Wesentlichen in Fahrzeuglängsrichtung von der Lagerungseinheit abstehenden Tragelement (13), an dem die Schiebetür schwenkbeweglich angebracht ist, wobei eine Anbindungsstelle (7) der Schiebetür mit dem Einschieben der Lagerungseinheit (3) in den Bogenabschnitt (11) vom Fahrzeug weg bewegt wird, so dass die Schiebetür in den Bogenabschnitt (11) ohne Kollision mit der Karosserie eingeschoben werden kann.

2. Kraftfahrzeug nach Anspruch 1, bei welchem die Lagerungseinheit (3) mit wenigstens zwei in Fahrzeuglängsrichtung beabstandeten Verschiebungsmitteln (4) versehen ist.

3. Kraftfahrzeug nach einem der Ansprüche 1 bis 2, bei welchem das Tragelement (13) mit einem vom Fahrzeug weg gerichteten frontseitigen Endabschnitt (6) versehen ist, an dem die Schiebetür schwenkbeweglich angebracht ist.

4. Kraftfahrzeug nach einem der Ansprüche 1 bis 3, bei welchem das Verschiebungsmittel in Form einer Gleit- oder Laufrolle ausgebildet ist.

5. Kraftfahrzeug nach einem der Ansprüche 1 bis 4, welches im Bereich der Türöffnung wenigstens ein zweites Schienensystem aufweist, das umfasst:
- eine mit der Karosserie fest verbundene Führungsschiene,
- eine der Führungsschiene zugeordnete Baugruppe mit einer in die Führungsschiene eingreifenden Lagerungseinheit, die mithilfe wenigstens eines Verschiebungsmittels entlang der Führungsschiene verschiebbar ist, und einem mit der Lagerungseinheit und der Schiebetür verbundenen Tragelement, durch das die Schiebetür schwenkbeweglich mit der Lagerungseinheit verbunden ist.

## Claims

1. A motor vehicle, comprising a retracted rear section with a rail system (1) of a bearing and guide apparatus for a sliding door, by means of which the sliding door is movable between a closed position in which the sliding door closes a door opening and an opened position in which the door is situated adjacent to the door opening, which comprises:
- a guide rail (2) which is connected to the body of the motor vehicle and is provided with a straight rail section (10) extending substantially in the longitudinal direction of the vehicle and a bent section (11) adjacent thereto which is curved towards the middle of the vehicle by following the retracted rear section;
- a first module which is associated with the guide rail (2) and comprises a bearing unit (3) engaging in the guide rail (2), said bearing unit (3) being displaceable along the guide rail by means of at least one displacement means (4), and a support element (13) which is rigidly connected to the bearing unit and protrudes from the bearing unit at the front side of the displacement means towards the front substantially in the longitudinal direction of the vehicle, on which the sliding door is attached in a pivotably movable manner, wherein a linkage point (7) of the sliding door is moved away from the vehicle following the insertion of the bearing unit (3) into the bent section (11), so that the sliding door can be pushed into the bent section (11) without collision with the car body.

2. A motor vehicle according to claim 1, wherein the bearing unit (3) is provided with at least two displacement means (4) spaced in the longitudinal direction of the vehicle.

3. A motor vehicle according to one of the claims 1 to 2, wherein the support element (13) is provided with a front-side end section (6) which faces away from the vehicle and on which the sliding door is attached in a pivotably movable manner.

4. A motor vehicle according to one of the claims 1 to 3, wherein the displacement means is arranged in form of a sliding or running roller.

5. A motor vehicle according to one of the claims 1 to 4, which comprises at least one second rail system in the region of the door opening, which comprises:
- a guide rail rigidly connected to the car body;
- a module which is associated with the guide rail and comprises a bearing unit which engages in the guide rail and which is displaceable along the guide rail by means of at least one displacement means, and a support element which is connected to the bearing unit and the sliding door, by means of which the sliding door is connected in a pivotably movable manner to the bearing unit.

## Revendications

1. Véhicule à moteur avec une partie arrière resserrée avec un système de rails (1) d'un dispositif de support et de guidage pour une porte coulissante, par lequel la porte coulissante peut être déplacée entre une position de fermeture dans laquelle la porte coulissante ferme une ouverture de porte et une position d'ouverture dans laquelle la porte se trouve sur le côté près de l'ouverture de porte, comprenant :
- un rail de guidage (2) relié à la carrosserie du véhicule à moteur, qui est muni d'une section de rail droite (10) s'étendant sensiblement dans le sens longitudinal du véhicule et d'une section de rail courbe (11) faisant suite à celle-ci, qui est courbée vers le milieu du véhicule en suivant la partie arrière resserrée,
- un premier module associé au rail de guidage (2) avec une unité de support (3) se mettant en prise dans le rail de guidage (2), qui peut être déplacée à l'aide d'au moins un moyen de déplacement (4) le long du rail de guidage, et avec un élément portant (13) relié de façon rigide à l'unité de support, dépassant de l'unité de support vers l'avant sensiblement dans le sens longitudinal du véhicule sur l'avant du moyen de déplacement et sur lequel la porte coulissante est disposée de façon mobile en basculement, le point de liaison (7) de la porte coulissante avec l'insertion de l'unité de support (3) dans la section courbe (11) étant écarté du véhicule de sorte que la porte coulissante peut être insérée dans la section courbe (11) sans collision avec la carrosserie.

2. Véhicule à moteur selon la revendication 1, dans lequel l'unité de support (3) est munie d'au moins deux moyens de déplacement (4) écartés dans le sens longitudinal du véhicule.

3. Véhicule à moteur selon l'une des revendications 1 à 2, dans lequel l'élément portant (13) est muni d'une section d'extrémité avant (6) orientée à l'opposé du véhicule sur laquelle la porte coulissante est disposée de façon mobile en pivotement.

4. Véhicule à moteur selon l'une des revendications 1 à 3, dans lequel le moyen de déplacement est conformé comme un galet glissant ou roulant.

5. Véhicule à moteur selon l'une des revendications 1 à 4, présentant au niveau de l'ouverture de porte au moins un deuxième système de rail qui comprend :
- un rail de guidage fixé à la carrosserie,
- un module associé au rail de guidage avec une unité de support se mettant en prise dans le rail de guidage, qui peut être déplacée à l'aide d'au moins un moyen de déplacement le long du rail de guidage, et avec un élément portant relié à l'unité de support et à la porte coulissante, par lequel la porte coulissante est reliée de façon mobile en basculement à l'unité de support.
